Europäisches Patentamt

European Patent Office

Office européen des brevets

(19)

(11) Publication number: **0 254 424 B1**

(12) # EUROPEAN PATENT SPECIFICATION

(45) Date of publication of patent specification: **06.11.91** (51) Int. Cl.5: **B01J 2/00**, B01J 19/08, C09C 3/04

(21) Application number: **87305543.8**

(22) Date of filing: **22.06.87**

(54) **Powder treating method and apparatus.**

(30) Priority: **20.06.86 JP 145922/86**
**20.06.86 JP 145923/86**
**21.04.87 JP 98975/87**

(43) Date of publication of application:
**27.01.88 Bulletin 88/04**

(45) Publication of the grant of the patent:
**06.11.91 Bulletin 91/45**

(84) Designated Contracting States:
**BE CH DE FR GB IT LI NL SE**

(56) References cited:
**US-A- 3 485 591**

**CHEMICAL ABSTRACTS, vol. 102, no. 4, January 1984, page 98, abstract no. 26414n, Columbus, Ohio, US;T. IHARA et al.: "Surface modification of pigments by low temperature plasma treatment".**

(73) Proprietor: **Nippon Paint Co., Ltd.**
**2-1-2, Oyodokita Oyodo-ku**
**Osaka-shi Osaka-fu(JP)**

(72) Inventor: **Ikeda, Shoji**
**67-2-503, Ikaga-Nishimachi**
**Hirakata-shi Osaka-fu(JP)**
Inventor: **Nishizawa, Koji**
**6-28-405, Makitacho**
**Takatsuki-shi Osaka-fu(JP)**
Inventor: **Yagi, Makoto**
**31-207, 1-13, Mitsuigaoka**
**Neyagawa-shi Osaka-fu(JP)**
Inventor: **Kubo, Nobuaki**
**476-2-2-1201, Kano**
**Higashiosaka-shi Osaka-fu(JP)**

(74) Representative: **Geering, Keith Edwin et al**
**REDDIE & GROSE 16 Theobalds Road**
**London WC1X 8PL(GB)**

**Description**

The present invention relates to the treatment of powders, e.g. pigments, to improve their surface properties.

Powders used for coatings, particularly pigments, if their surfaces are chemically inert cannot be thoroughly dispersed in vehicles. In order to improve the chemical properties of the powder surface, surface treatment by low temperature plasma has been contemplated. Low temperature plasma treatment of powders while rotating or swinging a drum containing them, or while stirring them by impeller or magnetic stirrer etc., are described in JP Unexamined Patent Patent Publication Nos.56-155631, 57-177342, 58-205540 and 59-145038. However, depending on the type of powder such prior methods tend to result in granulation or coagulation of the powder into lumps or in adhesion of powder to the vessel wall, this hindering uniform and efficient treatment.

The present invention provides a method of treating powder which comprises subjecting the powder to active species from low temperature plasma while agitating it by vibration and/or by means of precessional movement of a rotating helical screw. It also provides apparatus for performing the method comprising a container for the powder, means for generating low temperature plasma and exposing powder in the container to active species therefrom, and means for agitating powder in the container by vibration and/or by a precessing rotating helical screw. The apparatus preferably has a treating chamber formed by two opposed portions with complementary openings joined via means electically insulating these portions so that they may be utilized as mutually facing exciting electrode and grounding electrode.

If, prior to the treatment, the water content of the powder is reduced or removed by drying, e.g. under heating or reduced pressure, the fluidity of the powder in the apparatus is enhanced, resulting in improved treatment efficiency; and if the powder is previously classified to a predetermined maximum particle diameter, its fluidity is likewise enhanced, resulting in improved treatment efficiency. One or both of these pretreatments is/are preferably performed, but neither is essential.

The invention is illustrated, by way of example only, by the following description of currently preferred embodiments to be taken in conjunction with the accompanying drawings, in which like reference numerals indicate like parts and in which :

FIGURES 1 to 3 are diagrams of respective apparatus according to the invention using high speed rotational vibration;

FIGURES 4 to 6 are diagrams of respective apparatus according to the invention in which a fluidized layer is produced by vibration;

FIGURE 7 is a front view, with parts broken away, of apparatus according to the invention in which insulated parts of the treatment vessel constitute electrodes;

FIGURE 8 is a plan view of the Fig.7 apparatus; and

FIGURES 9 to 11 are diagrams of respective apparatus according to the invention using precessing rotating helical screws.

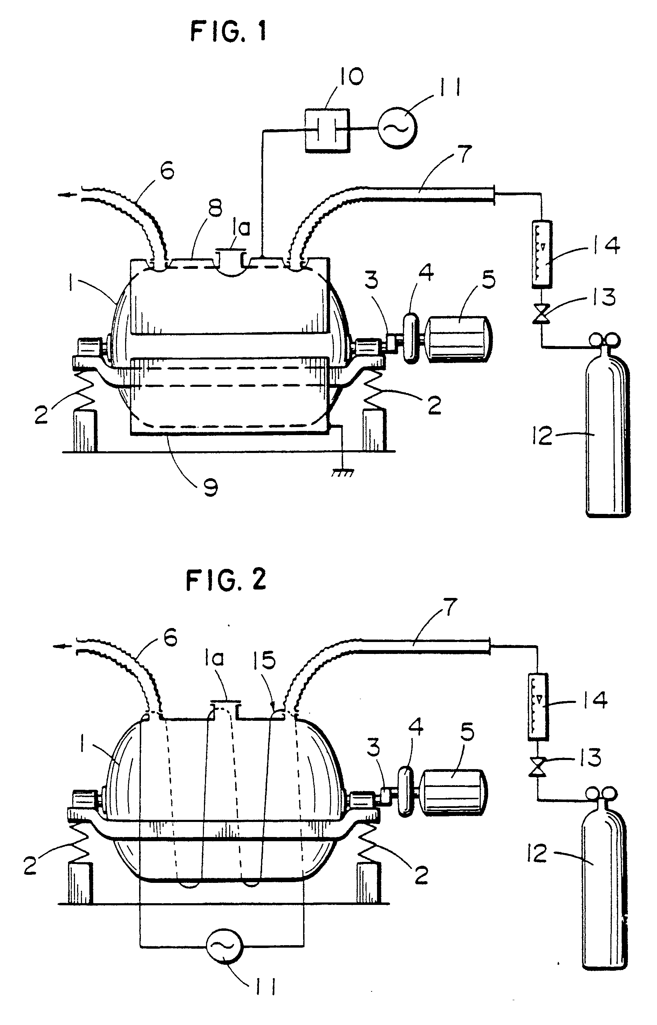

The apparatus of Fig.1 is based on vibrating mills normally used for pulverizing solids. Thus a treating chamber 1 corresponding to the pulverizing cylinder of a vibrating mill is held on springs 2 and subjected to high speed rotary vibration by revolution of a motor 5 connected thereto through an eccentric shaft 3 and a rubber joint 4.

To this treating chamber 1 there are connected an exhaust pipe 6 linked to an exhaust system for keeping the chamber at reduced pressure and a gas pipe 7 for leading gas used for the treatment into the chamber. These two pipes 6 and 7 may be of various materials, but are preferably of such structure that they do not transmit vibration to the exhaust system or gas supply section; flexible tubes or the like are suitable, but not essential.

The inside wall surface of such flexible tube or of the treating chamber 1 is preferably made inert; for example this may be by way of glass lining or polytetrafluoroethylene coating for the treating chamber 1 and polytetrafluoroethylene coating for the flexible tube.

In this example, the low temperature plasma is produced by the RF (radio frequency) discharge from a pair of electrodes 8 and 9 so placed above and below the treating chamber 1 as to cover it. The upper electrode 8 is an exciting electrode to which an RF power source 11 is linked through a matching unit 10, and the other electrode 9 a grounding electrode.

After introducing powder to be treated through a hatch 1a into treating chamber 1, the air in the treating chamber 1 is exhausted through exhaust pipe 6 by an exhaust system (not shown) to bring the inside of the treating chamber 1 to a reduced pressure of the order of 13.3 to 1.33 Pa ($10^{-1}$ to $10^{-2}$ Torr).

Simultaneously, high speed rotational vibration of the treating chamber 1 is started by turning the motor 5. The conditions of the high speed rotational vibration are not critical in this example; preferably the speed of the motor is from 600 to 2,400 rpm (10 to 40 Hz, as converted into vibration frequency) with an amplituide of 2 to 10 mm. Under this high speed rotational vibration, the powder particles move while individually receiving violent impact shearing action.

The conversion of the revolutions of the motor into vibration frequency is made on the following basis. Thus at 1,000 rpm, the vibration is believed to occur 1,000 times/min and the frequency/sec - the vibration frequency (Hz) - is given by dividing by 60 - i.e. 1000/60 or 16.7 Hz.

The gas for producing plasma is led in from a cylinder 12 joined to one end of the gas pipe 7, to set the gas pressure inside the reaction chamber 1 to a specified value. In this figure, 13 denotes a valve for adjusting the amount of gas supplied from cylinder 12 to gas pipe 7, and 14 a flow-meter for detecting the amount of the aforementioned gas.

The gas for producing plasma is not critical according to this invention. For example, any of the following may be selected according to the use:

Reactive or nonreactive gases such as air, hydrogen, oxygen, ammonia, carbon dioxide, carbon tetrafluoride, nitrogen, argon, helium or like inorganic gases; or propylene, benzene, vinyl monomer or like organic gases.

The gas pressure in the reaction chamber 1, which is not critical in this example, is preferably from 1.33 Pa - 1.33 kPa (0.01 to 10 Torr), more preferably 6.66 - 666 Pa (0.05 to 5 Torr), when the aforementioned gases are used for example. The reasons why the pressure inside the treating chamber 1 is preferably set within the aforementioned range are as follow:

If the gas pressure inside the treating chamber 1 is lower than 1.33 Pa(0.01 Torr), there is a possibility of good treating effect not being achieved, because the concentration of the active species produced by the low temperature plasma atmosphere may be insufficient. If the gas pressure exceeds 1.33 kPa(10 Torr), the mean free path maybe too short for production of a stable plasma and hence for high efficiency of treatment.

After setting the treating chamber 1 to a specified gas pressure as above, RF is impressed on the electrode 8 by operating the RF power source 11 to excite the aforementioned gas in the treating chamber 1, thereby producing the low temperature plasma atmosphere.

The RF frequency employed is not critical according to the present invention, but is preferably $10^3$ to $10^9$ Hz; outside the latter range a stable low temperature plasma atmosphere may sometimes not be produced or maintained so that adequate treating effect might not be obtained.

The active species produced by the low temperature plasma attack the powder surface, forming functional groups which promote affinity with vehicles etc. In this example, the powder particles spattered up by the high speed rotational vibration inside the treating chamber 1 come into contact with the low temperature plasma atmosphere which has spatially spread in this treating chamber, whereby they are believed to be uniformly treated. As in an ordinary vibrating mill, a medium such as balls, rods, etc., maybe in the treating chamber 1 together with the powder; in this way, the powder surface may be treated, while further finely pulverizing the powder by means of this medium, thus enabling attainment of greater treating effect.

After a period of treatment the treating chamber 1 is returned to atmospheric pressure with the application of RF and the vibration of the reaction chamber 1 suspended.

In this example, the RF electrodes are of the capacitance type, but an induction-type electrode in the form of a coil 15, as shown in Fig.2, can be used instead under similar treatment conditions.

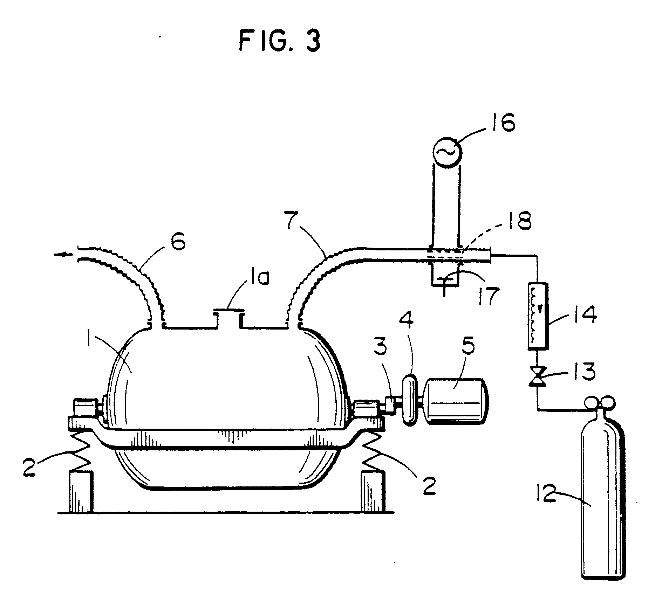

The apparatus of Fig.3 differs from the preceding two examples in that the low temperature plasma is produced by microwave discharge, but is otherwise arranged and operated as described for Fig.1.

This apparatus takes advantage of the fact that the active species produced by microwaves generally have longer lives than those produced by RF discharge. Midway in the gas pipe 7 a microwave oscillator 16 and a plunger 17 are installed. The plunger 17 reflects the microwaves produced by oscillator 16 and is moveable axially (up and down in the drawing) to control the intensity of the microwaves in gas pipe 7. The active species produced in the low temperature plasma atmosphere 18 formed between oscillator 16 and plunger 17 are blown onto the powder in the treating chamber 1 through the gas pipe 7 to effect the low temperature plasma treatment.

The procedures and conditions of pressure reduction, vibration, gas supply, final repressurising with suspension of treatment, and use of balls or rods etc. in the chamber 1, are as described in connection with Fig.1.

The microwave frequency employed is not critical according to this invention, but is desirably from $10^9$ to $10^{12}$ Hz.

The active species produced in the low plasma atmosphere 18 are carried by the gas from cylinder 12 to be blown onto the powder in chamber 1; they attack the powder surface to form functional groups which

3

promote affinity with vehicles etc.

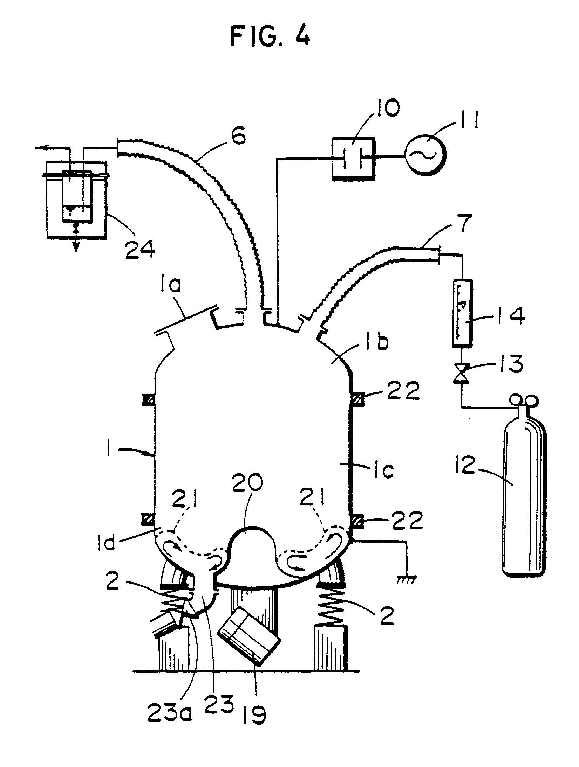

In the above examples the powder is agitated by high speed rotational vibration, but other types of vibration can be employed according to the invention, e.g. as shown in Fig.4.

In the Fig.4 apparatus the treating chamber 1 is held on a plurality of springs 2 and a vibratory motor 19 is mounted obliquely on its bottom surface. The vibration generated by motor 19 is transmitted into chamber 1 through this bottom surface as an upwardly inclined semielliptical vibration. The internal bottom surface of the chamber 1 has a protrusion 20 and the powder 21 is agitated, forming a fluidized layer with up and down flow in the radial direction (as shown by arrows in the drawings) while swirling around this protrusion 20.

This example resembles the previous three examples in having an exhaust pipe 6 coupled with an exhaust system for bringing chamber 1 to a reduced pressure and a gas pipe 7 for leading in gas into chamber 1, these pipes preferably being of a structure which does not transmit vibration to the exhaust system or gas supply section, and their inner surfaces and that of chamber 1 preferably being inactive.

In this example, the low temperature plasma is produced by RF discharge. The electrodes for producing the RF discharge are formed by dividing chamber 1 itself. Thus, as seen in the drawing, with the treating chamber 1 divided into upper, intermediate and lower parts 1b, 1c and 1d, a pair of electrodes is provided by the uppermost part 1b and the lowermost part 1d.

To the upper part 1b and RF power source 11 is linked through a matching unit 10, while the lower side part 1d is earthed.

After putting the powder to be treated into chamber 1 through hatch 1a, air in this treating chamber 1 is exhausted from the chamber via exhaust pipe 6 by means of the exhaust system.

Vibration of chamber 1 is started by turning on vibratory motor 19. The conditions of vibration, which are not critical in this example, desirably involve operation of vibratory motor 19 at 600 to 2,400 rpm (10 to 40 Hz when converted to vibration frequency as above), with an amplitude of 2 to 10 mm. Vibrated in this way, the powder in chamber 1 forms a fluidized layer as hereabove-described.

The gas for plasma generation is led in from cylinder 12 via gas pipe 7 to set the gas pressure in chamber 1 to a given value. In this figure, 13 denotes a valve for adjusting the amount of the gas supplied to the gas pipe 7 from the cylinder 12; 14 a flow meter for detecting the aforementioned amount of gas; 23 a take-out port for taking powder 21 out of the treating chamber 1; 23a a valve; and 24 a gas trap for preventing reactive gas, such as $NH_3$, etc., when used, from entering the exhaust system. Obviously, such a gas trap 24 is utilizable also in the previous three examples.

Similar gases may be used for plasma generation as mentioned in the previous three examples and the gas pressure in chamber 1 is preferably 1.33 Pa-1.33 kPa (0.01 to 10 Torr), more preferably 6.66-666 Pa (0.05 to 5 Torr), for the same reasons as before.

After setting chamber 1 to a given gas pressure as described, the gas is excited, with an RF frequency ($10^3$ to $10^9$ Hz) of the same order as in previous examples impressed on the upper part 1b of the treating chamber 1 by operating an RF power source 11, thereby producing a low temperature plasma atmosphere.

The active species generated in the low temperature plasma attack the surface of the powder, causing functional groups which promote affinity with vehicles etc., to be formed. In this example, the powders are believed to be treated at high efficiency, because the powders swirl under vibration, while forming a fluidized layer in the treating chamber 1, so that they make uniform contact with the low temperature atmosphere spatially spread inside the treating chamber 1.

After treatment for a given period, the impression of RF and the vibration of the reaction chamber 1 are suspended and the treating chamber 1 is returned to atmospheric pressure.

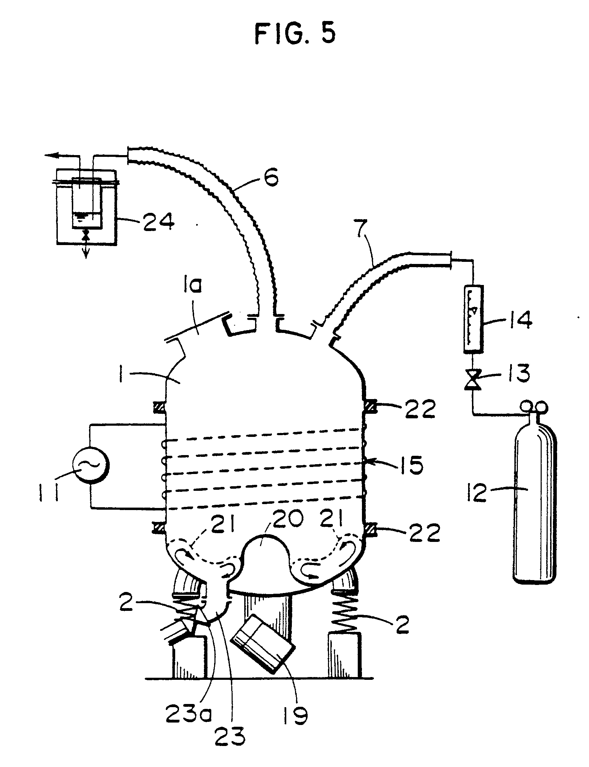

In this example, the electrodes for impressing RF are provided by way of dividing the treating chamber 1, but they may comprise a pair of electrodes so placed as to cover the treating chamber 1, as in the example of Fig.1 - or the RF discharge equipment may instead be of the induction type with a coil 15, as seen in Fig.5; the procedures and treatment conditions may be similar whatever the RF discharge equipment.

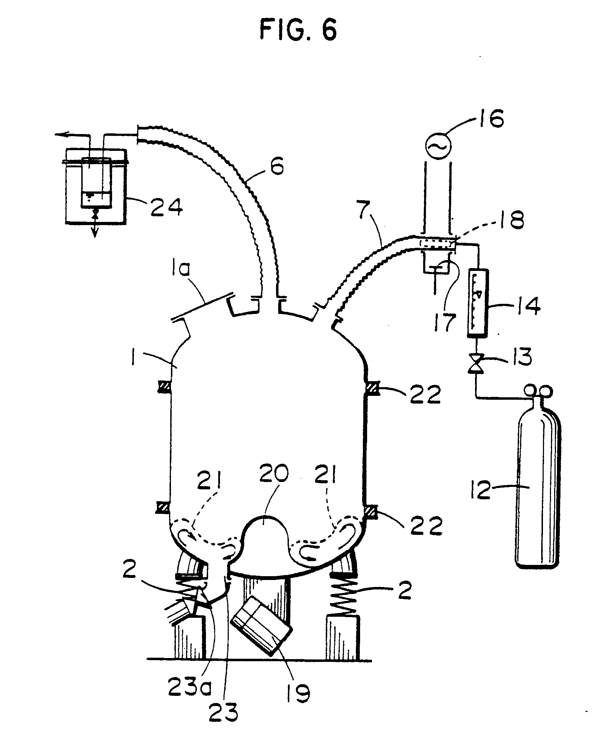

In the apparatus of Fig.6, as in that of Fig.3, active species produced by microwave discharge are used as the low temperature plasma, the apparatus otherwise being as in Fig.4.

In Fig.6, as in Fig.3, a microwave oscillator 16 and a plunger 17 are provided in the gas pipe 7 for supplying gas to the treating chamber 1, and active species generated in the low temperature plasma atmosphere formed between the microwave oscillator 16 and the plunger 17 are blown onto the powder in chamber 1 to effect the low temperature plasma treatment.

In use of the Fig.6 apparatus, as in the example of Fig.4, chamber 1 is brought to reduced pressure while the powder 21 flows under the applied vibration, and then chamber 1 is brought to a given gas pressure by introducing gas thereinto. The gas pressure as before is preferably 1.33 Pa-1.33 kPa (0.01 to 10 Torr), more preferably 6.66 - 666 Pa (0.05 to 5 Torr).

Then low temperature plasma atmosphere 18 is produced in the gas pipe by operating the microwave transmitter 16 (preferably at a frequency of $10^9$ to $10^{12}$ Hz) and active species generated in the low temperature plasma atmosphere 18 are carried by the gas from the cylinder 12 onto the powder, attacking the powder surfaces; as a result, functional groups which promote affinity with vehicles etc., are formed, thereby improving the powders' affinity with such vehicles etc. In this example, highly efficient treatment is believed to be made, because the powders swirl, forming a fluidized layer in the treating chamber 1, and make uniform contact with the active species blown into the treating chamber 1.

After treatment for a given period, the microwave discharge and the vibration of the reaction chamber 1 are suspended and the treating chamber 1 is returned to atmospheric pressure.

Whilst the method of the invention is described above in conjunction with particular types of vibratory apparatus (involving high speed rotational vibration or formation of fluidized layer by vibration) other types of vibration may be utilized. Also, when using apparatus of the above-described types, combinations other than those specifically mentioned may be employed. For example, high speed rotational vibration apparatus of Fig.1 may have electrodes provided by the chamber itself as in Fig.4; or electrodes covering the chamber as in Fig.1 may be used in the fluidized layer chamber of Fig.4.

The invention may use any apparatus for applying low temperature plasma treatment while stirring or agitating powder by way of vibration.

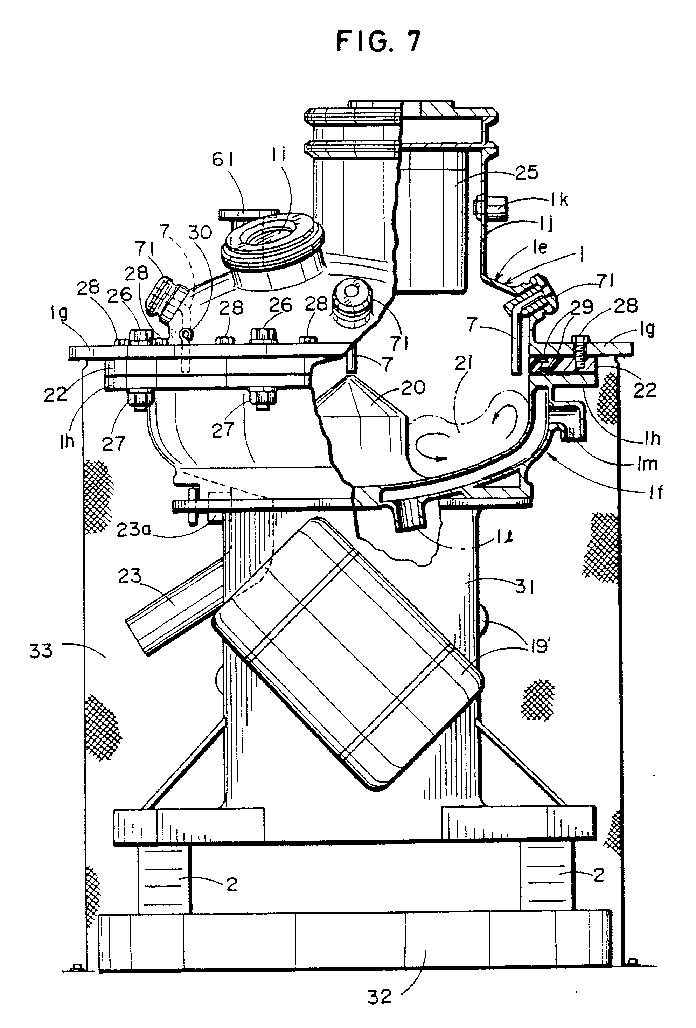

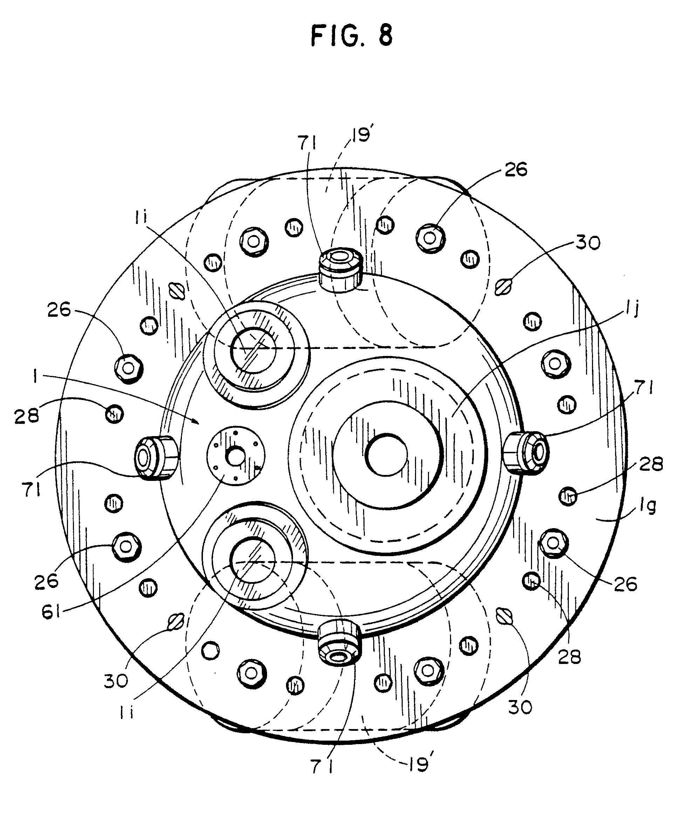

In the embodiment of Figs.7 and 8 the powder treating apparatus has its treating chamber 1 formed by mating the openings of upper and lower vessels 1e and 1f to one another. An insulator 22 is provided at the junction between these vessels, to electrically insulate upper and lower vessels 1e and 1f from one another. The lower vessel 1f is used as an exciting electrode, to which RF for the low temperature plasma treatment is to be applied, and upper vessel 1e is a grounding electrode.

The lower vessel 1f is preferred as exciting electrode because the low temperature plasma is present in the neighbourhood of the exciting electrode and accordingly the treating efficiency is greatest if the exciting electrode is the lower side 1f with which the powder 21 is always in contact. Besides, using the upper vessel 1e as exciting electrode involves following problems 1 to 4:

(1) if the upper vessel 1e, to which the gas supply pipe and the exhaust pipe are joined, is used as the exciting electrode, insulation is essential to prevent leakage of RF from these pipes;

(2) the upper vessel 1e needs to be dismantled often for cleaning of the inside of the treating chamber 1, and many pipes are joined thereto. Therefore, the structure of the electromagnetic shield would have to be complex;

(3) because of the need for such an electromagnetic shield, charging-in of material will become difficult;

(4) when high output RF is impressed, heat will be evolved from the wire connection between the matching box and the exciting electrode; therefore, coaxial cable can not be used and its configuration will be restricted. For this reason, the matching box needs to be mounted on the electromagnetic shield; but if the upper vessel 1e is used as the exciting electrode, the electromagnetic wave shield itself will make violent vibration during the treatment. Thus, as a matter of fact, the matching box should not be directly mounted thereon.

If problems (1) to (4) etc. can be solved it could be appropriate to use the upper vessel 1e as the exciting electrode.

Any insulator 22 will do for insulating the aforementioned two vessels 1e and 1f, but material which has a low dielectric constant, which is stable in the low temperature plasma and which permits maintenance of vacuum inside the treating chamber 1 is preferable. As such a material, polyacetal resin (for example, Du Pont's Delrin) is used in this example, but it is of course permissible for other materials to be used.

On upper vessel 1e are provided ports 71 (for passing into the treating chamber 1 gas supply pipes 7) and a flanged pipe 61 to which an exhaust pipe 6 is connected and a flange 1g extends around its circular end edge at the junction the lower vessel 1f. A single gas pipe may be enough, but if a plurality is provided as in this embodiment, supply of gas into the treating chamber 1 can be made uniformly with the benefit of improvement in powder treating efficiency.

The nearer to the powder 21 is the place from which the treatment gas is blown against it, the higher is the powder treating efficiency. For this reason, the nearer the powder is to the gas pipe 7 outlet, the better, but if it is too near (e.g. in contact), the pipe may be plugged thereby. Accordingly, the outlet of gas pipe 7 is desirably placed at a definite distance of 60 cm or less from the powder surface.

When conducting plasma treatment with vibration as above-described, the outlet of gas pipe 7 desirably approaches the powder surface to enhance treating efficiency, but with a gas pipe 7 projecting into the treating chamber 1 measures for combating vibration need to be taken, resulting in complex structure.

Accordingly, in order to meet the aforementioned two requirements, as shown in Figs.7 and 8, a structure of the gas pipe 7 being led into the treating chamber 1 through side wall of the vessel 1e is preferable.

Since this gas pipe 7 is exposed to the low temperature plasma atmosphere in the treating chamber, it is desirably insulative for prevention of leakage of RF. As an insulative gas pipe, one formed of an insulator, or a metal pipe coated with insulating material, may be utilized. It is also desirable from the standpoint of RF leakage proofing for such a pipe 7 to be placed not on the lower vessel 1f which is connected to RF, but on the upper vessel 1e being the earthed side.

On upper vessel 1e, there are provided peep holes 1i for observation of the inside of the treating chamber 12 and a bag filter 25 for prevention of scattering of powders. The bag filter 25 is housed in a cylindrical part 1j projecting upwards from the vessel 1e and in this cylindrical part 1j, there is provided a seat 1k for mounting a pressure gauge for measurement of vacuum in the treating chamber 1.

On the lower vessel 1f, a flange 1h to match flange 1g is provided at the junction with upper vessel 1e, and a central protrusion 20 is formed internally. The powder 21 is agitated, forming a fluidized layer with up and down flow in the radial direction, as shown by the arrows in the drawing, while swirling around this protrusion 20.

The lower vessel 1f is of an inner and outer double shell structure, such that the low temperature plasma treatment efficiency may be enhanced by passing a heating (or cooling) medium between these two shells. In this drawing 1ℓ denotes a supply port for the medium, while 1m designates a port for discharging used medium.

To the bottom of the vessel 1f, a port 23 for taking out treated powder is fitted through a valve 23a.

Flanges 1g and 1h on the two vessels 1e and 1f holding insulator 22 between them are fixed securely by tightening nuts 27 on bolts 26 therethrough. Insulator 22 is fixedly mounted on the flange 1g of the upper vessel 1e by means of bolts 28.

O-rings 29 maintain air-tightness where the flanges 1g and 1h and the insulator 22 are securely fastened and slingers 30 are for hanging up the upper vessel 1e. O-rings 29 may be made of silicone resin, etc., normally used for this purpose.

Chamber 1 is fixed on a mount 31. Chamber 1 preferably has a ratio of diameter to height of 9:1 to 1:3, and more preferably is of laterally long shape; the area where the powder 21 contacts the low temperature plasma atmosphere is larger, with resultant higher treating efficiency, in a laterally long treating chamber 1 than in a longitudinally long one.

Mount 31 is held on a base 32 through rubber springs 2 while on opposite sides two units of hydraulic vibratory motor 19′ are mounted with their axes criss-crossed. Hydraulic vibratory motor 19′, like the previously mentioned vibratory motor 19, transmits an obliquely upward going semielliptical vibration to within treating chamber 1 from its bottom. An aforementioned vibratory motor 19 may be used, but the mount 31 on which the motor is mounted is in contact with the lower vessel 1f which is directly connected with a high frequency power sorce, so that the risk that RF might leak to the motor lead wires is high; it is for this reason that in this embodiment a hydraulic vibratory motor 19′ which has no such lead wires is employed; it goes without saying that the piping for feeding the driving oil to the motor 19′ is desirably made of a material which will not carry RF.

Around the mount 31 on which chamber 1 is fixed, an electromagnetic wave shield 33 of mesh, etc., is provided. The lower end of shield 33 is fixed on the floor on which the base 32 is placed by means of screws 34, etc., and its upper end is in contact with the flange 1g of the upper vessel 1e.

The flange 1g extends beyond the perimeter of the rest of the apparatus, being wider than flange 1h and insulator 22, and to this protruding flange the electromagnetic shield 33 is abutted from below. This structure is advantageous in that since the electric connection between wave shield 33 and upper vessel 1e may be made by merely placing upper vessel 1e on lower vessel 1f, the dismounting and mounting of the upper vessel 1e for cleaning etc., is facilitated.

The shield 33 is earthed, its lower end being in contact with the floor and its upper end with the earthed upper vessel 1e, so that it is possible to completely sheild the lower vessel 1f (being the exciting side) and the mount 31 etc.

Since shield 33, being fixed on the floor surface, does not vibrate during the treatment, fitting of a matching box for impressing high output RF is easy.

This structure has the advantages that since the lower vessel 1f, not the upper vessel 1e to which various pipes are connected, is used as the exciting electrode, the insulation of these pipes is made simple; and since the shield 33 surrounds the lower vessel 1f to which not many pipes are connected, the structure is simplified and charging-in of materials is readily made.

Such an electromagnetic wave shield 33 is not of necessity required according to this invention, but its installation is desirable for prevention of ill-effects of leaked RF on another equipment and human bodies.

Use of the apparatus of Figs.7 and 8 enables performance of the powder treating method of the invention at high efficiency.

The powder treating apparatus described in connection with Figs.7 and 8 illustrates an important aspect of the invention which is not limited to this embodiment only.

For example, the upper vessel 1e and not the lower vessel 1f maybe utilized as the exciting electrode. In this case, the shape and structure of the electromagnetic wave shield 33 and the respective shapes and structure of pipes 6 and 7, etc., shall be designed to accommodate themselves to the situation. The same is true of the shape and structure of other parts.

Thus this type of appartus is used for treating powders with low temperature plasma while stirring by vibration; the treating chamber for containing the powder is formed by matching the openings of upper and lower vessels to one another, and an insulator is provided at the junction of these two vessels, so that they may be electrically insulated from one another; and these two vessels are designed to be used as mutually facing exciting electrode and grounding electrode. This aspect of the invention is not particularly restricted to other structural features.

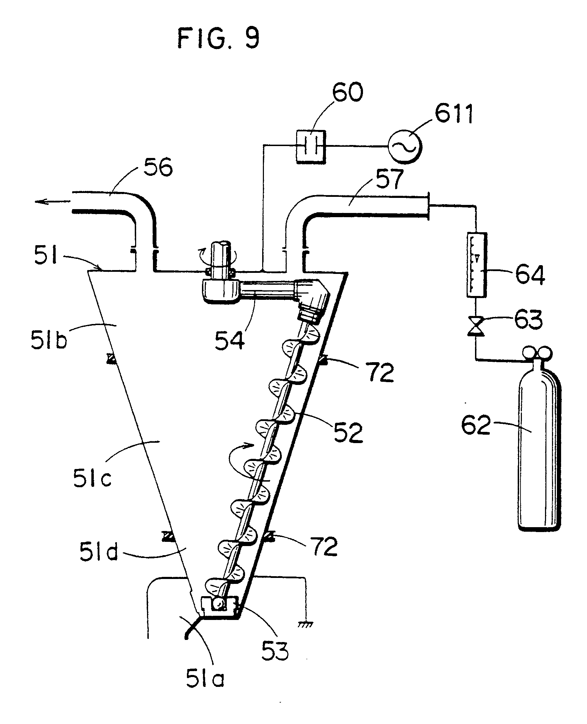

The apparatus of Fig.9 has a helical screw 52 in a nearly conical treating chamber 51. While the lower end of the screw 52 is held by a bearing 53 at the bottom of the treating chamber 51, to its upper end there is fixed a supporting arm 54 in such way that the arm 54 itself can turn. The arm 54 transmits the power for rotation of the screw 52. Then by turning this supporting arm 54, a precessional movement of the screw 52 centering on the aforementioned bearing is made. In this figure, 51a denotes an outlet for taking out the treated powders.

To the upper surface of this treating chamber 51, there are connected an exhaust pipe 56 linked with an exhaust system and a gas pipe 57 for letting the gas used for the treatment into the treating chamber 51. The inside wall surfaces of these two pipes 56 and 57 and the aforementioned treating chamber 51 are desirably inert e.g. having a glass lining or polytetrafluoroethylene coating etc as described for earlier examples. The low temperature plasma is generated by RF discharge. The electrodes for generating the RF discharge, in this example, are formed by dividing the treating chamber 51 itself. Thus, with the treating chamber 51 divided by insulators 72 into the upper, intermediate and lowerparts 51b, 51c and 51d, a pair of electrodes is provided by the uppermost part 51b and the lowermost part 51d. While to the uppermost part 51b an RF power source 611 is connected through a matching unit 60, the lowermost part 51d is grounded.

After putting the powder to be treated into the treating chamber 51, the aid in the treating chamber 51 is exhausted through an exhaust pipe 52 by an exhaust system (not shown), thereby bringing chamber 51 to a reduced pressure of the order of 13.3 - 1.33 Pa ($10^{-1}$ to $10^{-2}$ Torr).

Precessional movement of the screw 52 is started by turning the supporting arm 54, while letting screw 52 rotate. The rotational speed of the spiral screw 52 and the turning speed of the supporting arm 54 are not particularly critical, but the rotation of screw 52 is desirably 60 to 100 rpm, and the precessional movement is 1.5 to 2 rpm. The powder is not only turned and stirred by the precessional movement of screw 52, but stirred by the rotation of the screw 52 in such a way that upper and lower layers are exchanged.

The gas for the plasma generation is let into the reaction chamber 51 from a cylinder 62 joined to the gas pipe 57 to set the gas pressure in the reaction chamber 51 at a given value; 63 denotes a valve for regulating the amount of gas supplied from the cylinder 62 to the gas pipe 57, and 64 a flow meter for detecting the aforementioned amount of gas.

The gas used for plasma generation, which is not particularly critical, can for example be selected from among those previously mentioned.

The gas pressure in reaction chamber 51, which is not particularly critical in this example, is preferably 1.33Pa-1.33 kPa (0.01 to 10 Torr), more preferably 6.66-666Pa (0.05 to 5 Torr), when one or more of the aforementioned gases is used, for reasons given in connection with earlier examples.

After chamber 51 is set to a given gas pressure, RF is impressed on the uppermost part 51b of the treating chamber 51 by operating the RF power source 611, to get the aforementioned gas inside the treating chamber 51 excited, thereby generating the low temperature plasma atmosphere.

The frequency of RF impressed on the uppermost part of the treating chamber 51, being the exciting electrode, which is not particularly critical, is desirably $10^3$ to $10^9$ Hz as previously explained.

The active species generated in the low temperature plasma attack the surface of the powder, forming thereon functional groups which promote affinity with vehicles etc.

In this example, it is considered that powder is highly efficiently treated, because the powder which is not only turned and stirred by the precessional movement of screw 52 but stirred in such a way that their upper and lower layers are exchanged by the rotation of the screw 52, rotate constantly inside the treating chamber 51 and are brought into uniform contact with the low temperature plasma atmosphere which has

7

been spatially spread inside the treating chamber 51.

As in earlier examples a pulverization medium such as balls or rods, etc., like those used for pulverization of solid matters in mills may be present in treating chamber 51, together with the powder.

After conducting the treatment for a given period, the impression of RF and the movement of the spiral screw 52 are suspended and chamber 51 is returned to atmospheric pressure.

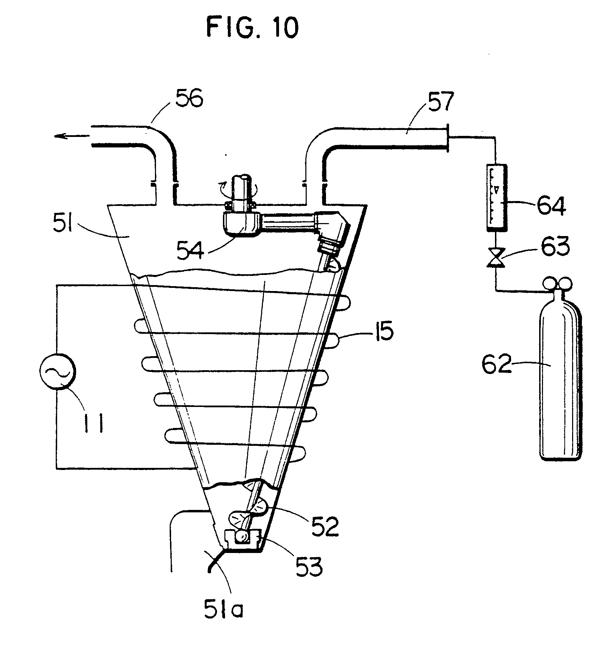

In this example, electrodes are provided by dividing the treating chamber 51, but instead the induction type involving a coil 15, as seen in Fig. 10, may be used, under similar conditions.

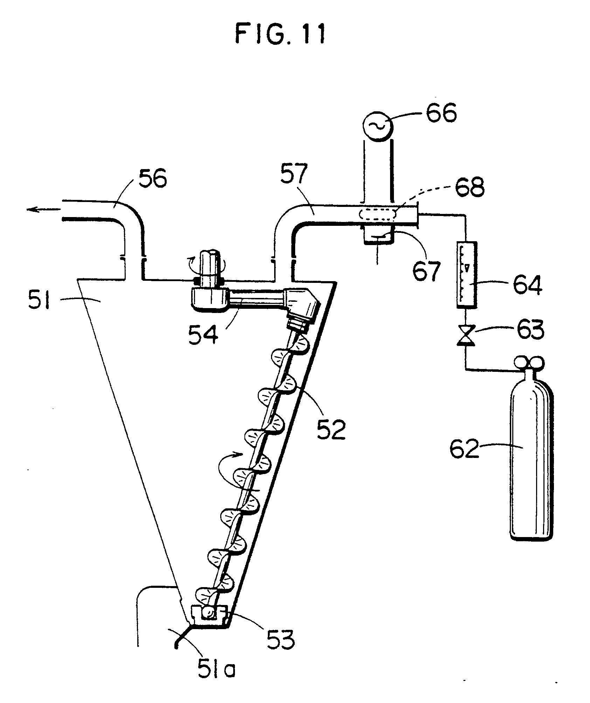

In the apparatus of Fig. 11 the low temperature plasma is produced by microwave discharge, the apparatus otherwise being no different from that of Figs. 9 and 10.

The apparatus of this example takes advantage of the fact that the active species produced by microwave have longer lives than those produced by RF discharge. A microwave oscillator 66 and its opposing electrode 67 are installed midway in the gas pipe 57 for supplying gas to the treating chamber 51. The active species generated in the low temperature plasma atmosphere formed between this microwave oscillator 66 and the opposing electrode 67 are blown onto the powder in the treating chamber 51 through gas pipe 57, whereby the low temperature plasma treatment of powders is performed.

As in the preceding two examples, chamber 51 is brought to a reduced pressure while making precessional movement of screw 52 and letting it rotate, and then chamber 51 is brought to a given gas pressure state by introducing the gas thereinto. The gas pressure which is not critical in this example, is desirably 1.33 Pa - 1.33 kPa (0.01 to 10 Torr), more preferably 6.66-666 Pa (0.05 to 5 Torr), for the same reasons as in the preceding examples.

After setting the pressure in chamber 51 to a given one, a low temperature plasma atmosphere 68 is produced in the gas pipe 57 by operating the microwave oscillator 66.

The frequency of the microwave produced by the microwave oscillator 66, which is not particularly critical, is preferably $10^9$ to $10^{12}$ Hz.

The active species generated in the low temperature plasma atmosphere 68 are carried by the gas coming from a cylinder 62 and blown onto the powder from the outlet of gas pipe 57; they attack powder surfaces, forming thereon functional groups which promote affinity with vehicles etc.

In this example, the aforementioned powder which is not only turned and stirred by precessional movement of screw 52, but stirred by rotation of this screw 52 in such a way that upper and lower layers are exchanged, continuously whirl in the treating chamber 51, to be mixed with the aforementioned active species which have been blown into this treating chamber 51, whereby uniform treatment is performed.

In this example also, if a medium like balls or rods, etc., for pulverization of solid matters as used in mills, is present in the treating chamber 51 , the treatment of powder surface may be made while finely pulverizing the powder, whereby still higher treating effect is attainable.

After conducting the treatment for a given period, the microwave discharge and the movement of the screw 52 are suspended and chamber 51 is returned to atmospheric pressure.

The apparatus used for this aspect of the invention (stirring by precessing rotating screw) is not limited to those of Figs.9 to 11. For example, in Fig. 9 capacitance type electrodes are formed by dividing the treating chamber 51 into three parts, but a structure having a pair of electrodes covering the treating chamber 51 as in earlier examples is permissible, and having electrodes of other structure than these may be employed. This means that similar modifications are similarly feasible in other parts; for example, the configuration of the reaction chamber 51 and that of the screw 52, etc., are not limited to the above-mentioned examples represented by the drawings.

This type of apparatus according to the invention is not particularly limited beyond being usable for effecting low temperature plasma treatment while stirring powder by precessional movement of a helical screw which is being rotated.

The following are examples illustrating the invention, together with comparative examples not according to the invention.

Examples 1 to 3

Powders (organic pigment of quinacridon type) were placed in respective treating apparatus as shown in Figs. 1 to 3 using high speed rotational vibration, and subjected to low temperature plasma treatment under the conditions shown in Table 1. After treatment, granulation of powders in the treating chambers and their cohesion on the inside wall surfaces of the treating chambers were examined, and the particle diameters of the treated powders were measured. The results are set out in Table 1.

Examples 4 to 6

Low temperature plasma treatment of powders was conducted as in Example 1 ~ 3, except that powder treating apparatus using fluidized layer formation by vibration (as shown in Figs. 4 to 6) were utilized. The results are shown in Table 1.

Example 7

The low temperature plasma treatment of powder was conducted as in Example 4, except that the powder was dried under heating before treatment. The results are given in Table 1.

Example 8

The low temperature plasma treatment of powder was conducted as in Example 4, except that the powder was classified by screening through a 400 μm (No.32) mesh. The results are shown in Table 1.

Comparative example 1

The low temperature plasma treatment of powder was conducted as in Example 1, except that the stirring was effected by turning of a drum. The results are set out in Table 1 and Table 3.

Comparative example 2          .

The low temperature plasma treatment was performed as in Example 1, except that the stirring of powder was effected by revolution of a propeller. The results are given in Table 1 and Table 3.

Example 9

The low temperature plasma treatment was carried out as in Example 4, except that the apparatus shown in Figs. 7 and 8 was used. The results are shown in Table 2.

Example 10

The low temperature plasma treatment of powder was conducted as in Example 9, except that the upper vessel was used as the exciting electrode, and the lower vessel as the earthed electrode. The results are shown in Table 2.

Example 11

The low temperature plasma treatment of powder was conducted as in Example 9, except that the ratio of diameter to height of the treating chamber comprised of upper and lower vessels was set at 1:1. The results are shown in Table 2.

Example 12

The low temperature plasma treatment of powders was conducted as in Example 9, except that the gas pipe outlets are located 30 cm from the surface of powders in the treating chamber. The results are set out in Table 2.

Example 13

The low temperature plasma treatment of powder was conducted as in Example 9, except that only one gas pipe was used. The results are shown in Table 2.

Example 14

The low temperature plasma treatment of powder was conducted as in Example 9, except that uncoated stainless steel pipes were used as the gas pipes. The results are shown in Table 2.

Examples 15 to 17

9

As the powder, organic pigment of quinacridon series type was used. It was subjected to low temperature plasma treatment under the conditions shown in Table 3 in powder treating apparatus of the types of Figs. 9 to 11. After the treatment, granulation of powders in the treating chambers and their cohesion on the inside wall surface of the treating chambers were examined and the particle diameter of the treated powders was measured. The results are shown in Table 3.

The treating efficiency was evaluated by the following measurements, using the pigment powders treated in the above-described Examples and Comparative examples:

Water dispersibility: After stirring under given conditions pigment powders which had been treated with low temperature plasma together with water in a test tube, the mixture was left standing and the suspension state of the particles was observed.

Viscosity: Pigment powders which had been treated with the low temperature plasma were dispersed in alkyd resin to form paste,and apparent viscosity was measured at 19.2 s$^{-1}$, using an E type viscometer.

Yield value: The yield value of the same paste used in the aforementioned viscosity measurement was determined by Casson Plot.

Flow coated luster: With the aforementioned paste turned into a coating, flow coated luster was measured at 20° gloss.

The results of the above measurements are listed in Tables 1, 2 and 3. In the Tables, the symbols for water dispersibility rating have the following significances :

o = good;

Δ = normal;

x = poor.

Table 1 Part 1

| | | Example | | | | |
|---|---|---|---|---|---|---|
| | | 1 | 2 | 3 | 4 | 5 |
| Agitation Type | | High speed rotational vibration | High speed rotational vibration | High speed rotational vibration | Vibrating flow | Vibrating flow |
| Particle movement conditions *1 | | 30 Hz Amplitude 7 mm pig/beads=1/1 | 30 Hz Amplitude 7 mm pig/beads=1/1 | 30 Hz Amplitude 7 mm pig/beads=1/1 | 30 Hz Amplitude 3 mm | 30 Hz Amplitude 3 mm |
| Plasma treatment conditions (Gas pressure = 133 Pa (1 Torr) in each case) | | Gas: oxygen High frequency : RF(capacity type) Output: 60 W Treating time : 3 hr | Gas: oxygen High frequency : RF (Induction type) Output: 60 W Treating time : 3 hr | Gas: oxygen High frequency: microwave Output: 1.5KW Treating time : 6 hr | Gas: oxygen High frequency: RF (capacity type) Output: 60 W Treating time: 3 hr | Gas: oxygen High frequency: RF (induction type) Output: 60 W Treating time: 3 hr |
| State after the treatment | Granulation | Did Not occur. | Did Not occur. | Did Not occur. | Did Not occur. | Did Not occur. |
| | Cohesion on wall | Did Not occur. | Did Not occur. | Did Not occur. | Did Not occur. | Did Not occur. |
| | Particle, diameter of powder(μm) | 60 ~ 100 | 60 ~ 100 | 60 ~ 100 | 100 ~ 400 | 100 ~ 400 |
| Dispersibility | Water dispersibility | o | o | o | o | o |
| | Viscosity (cP) | 100 | 95 | 150 | 120 | 110 |
| | Yield value | 1.0 | 1.0 | 3.0 | 2.0 | 1.5 |
| | Flow coated luster | 80 | 82 | 79 | 80 | 80 |

*1 Pig/beads stands for a ratio of pigment to medium.

11

Table 1 Part 2

| | | Example | | | Comparative example | |
|---|---|---|---|---|---|---|
| | | 6 | 7 | 8 | 1 | 2 |
| Agitation Type | | Vibrating flow | Vibrating flow | Vibrating flow | Drum turning | Propeller |
| Particle movement conditions *1 | | 30 Hz Amplitude 3 mm | 30 Hz Amplitude 3 mm Subjected to heat drying treatment | 30 Hz Amplitude 3 mm Subjected to classification treatment | 60 rpm pig/beads= 1/1 | 300 rpm |
| Plasma treatment conditions (Gas pressure = 133 Pa (1 Torr) in each case) | | Gas: oxygen High frequency: microwave Output: 1.5 kW Treating time: 6 hr | Gas: oxygen High frequency : RF(capacity type) Output: 60 W Treating time : 3 hr | Gas: oxygen High frequency : RF(capacity type) Output: 60 W Treating time : 3 hr | Gas: oxygen. High frequency: RF (capacity type) Output: 60 W Treating time: 3 hr | Gas: oxygen High frequency: RF (capacity type) Output: 60 W Treating time: 3 hr |
| State after the treatment | Granulation | Did Not ocur. | Did Not occur. | Did Not occur. | Occurred. | Occurred. |
| | Cohesion on wall | Did Not ocur. | Did Not occur . | Did Not occur. | Occurred. | Occurred. |
| | Particle diameter of powder(μm) | 100 ~ 400 | 100 ~ 400 | 100 ~ 400 | Unrecoverable | 900 |
| Dispersibility | Water dispersibility | o | o | o | x | Δ |
| | Viscosity (cP) | 130 | 110 | 100 | Unmeasurable | 320 |
| | Yield value | 5.0 | 1.0 | 1.0 | Unmeasurable | 17 |
| | Flow coated luster | 75 | 81 | 83 | Unmeasurable | 51 |

12

Table 2

| | | Example | | | | | |
|---|---|---|---|---|---|---|---|
| | | 9 | 10 | 11 | 12 | 13 | 14 |
| Agitation Type | | Vibrating flow | Vibrating flow | Vibrating flow | Vibrating flow | Vibrating flow | Vibrating flow |
| Particle movement conditions | | 30 Hz Amplitude 3 mm | 30 Hz Amplitude 3 mm | 30 Hz Amplitude 3 mm | 30 Hz Amplitude 3 mm | 30 Hz Amplitude 3 mm | 30 Hz Amplitude 3 mm |
| Plasma treatment conditions (Gas pressure = 133 Pa (1 Torr) in each case) | | Gas: oxygen High frequency : RF(capacity type) Output: 60 W Treating time : 3 hr | Gas: oxygen High frequency : RF (capacity type) Output: 60 W Treating time : 3 hr | Gas: oxygen High frequency: RF(capacity type) Output: 60 W Treating time : 3 hr | Gas: oxygen High frequency : RF(capacity type) Output: 60 W Treating time : 3 hr | Gas: oxygen High frequency : RF (capacity type) Output: 60 W Treating time : 3 hr | Gas: oxygen High frequency: RF(capacity type) Output: 60 W Treating time : 3 hr |
| Apparatus conditions | Exciting electrode | Lower | Upper | Lower | Lower | Lower | Lower |
| | Diameter: height ratio | 3:2 | 3:2 | 1:1 | 3:2 | 3:2 | 3:2 |
| | Gas pipe – powder distance (cm) | 5 | 5 | 5 | 30 | 5 | 5 |
| | Number of gas pipes | 4 | 4 | 4 | 4 | 1 | 4 |
| | Material of gas pipe | Insulator pipe | Insulator pipe | Insulator pipe | Insulator pipe | Insulator pipe | Stainless steel pipe |
| State after the treatment | Granulation | Did Not occur. | Did Not occur. | Did Not occur. | Did Not occur. | Did Not occur. | Did Not occur. |
| | Cohesion on wall | Did Not occur. | Did Not occur. | Did Not occur. | Did Not occur. | Did Not occur. | Did Not occur. |
| | Particle diameter of powder(μm) | 100 ~ 400 | 100 ~ 400 | 100 ~ 400 | 100 ~ 400 | 100 ~ 400 | 100 ~ 400 |
| Dispersibility | Water dispersibility | o | o | o | o | o | o |
| | Viscosity (cP) | 100 | 100 | 130 | 140 | 130 | 120. |
| | Yield value | 0.8 | 1.0 | 2.0 | 3.0 | 2.0 | 1.5 |
| | Flow coated luster | 85 | 82 | 80 | 78 | 81 | 80 |

Table 3

| | | Example | | | Comparative example | |
|---|---|---|---|---|---|---|
| | | 15 | 16 | 17 | 1 | 2 |
| | Agitation Type | Rotation and precession | Rotation and precession | Rotation and precession | Drum turning | Propeller |
| | Stirring conditions*1 | Rotation: 60 r.p.m. Precession: 2 r.p.m. pig/beads=1/4 | Rotation: 60 r.p.m. Precession: 2 r.p.m. pig/beads=1/4 | Rotation: 60 r.p.m. Precession: 2 r.p.m. pig/beads=1/4 | 60 r.p.m. pig/beads=1/1 | 300 r.p.m. |
| | Plasma treating conditions (Gas pressure = 133 Pa (1 Torr) in each case) | Gas: oxygen High frequency: RF (Capacity type) Output: 60 W Treating time: 3 hrs | Gas: oxygen High frequency: RF (Induction type) Output: 60 W Treating time: 3 hrs | Gas: oxygen High frequency: Microwave Output: 1.5 KW Treating time: 6 hrs | Gas: oxygen High frequency: RF (Capacity type) Output: 60 W Treating time: 3 hrs | Gas: oxygen High frequency: RF (Capacity type) Output: 60 W Treating time: 3 hrs |
| State after the treatment | Occurrence of granulation | Did Not occur. | Did Not occur. | Did Not occur. | Occurred. | Occurred. |
| | Occurrence of cohesion on wall surface | Did Not occur. | Did Not occur. | Did Not occur. | Occurred. | Occurred. |
| Dispersibility | Powders' particle diameter (μm) | 180 | 180 | 180 | Unrecoverable | 900 |
| | Water dispersibility | o | o | o | × | △ |
| | Viscosity (cP) | 100 | 110 | 130 | Unrecoverable | 320 |
| | Yield value | 0.0 | 1.0 | 5.0 | Unrecoverable | 17 |
| | Flow coating luster | 82 | 80 | 75 | Unrecoverable | 51 |

*1 Pig/beads stands for a ratio of pigment to medium.

The results of Table 1 indicate that in Examples 1 to 8 where one powder treating method of the invention was utilized, more uniform and effective treatment was made than in Comparative examples 1 and 2 which represent the conventional powder treating method. The results of Table 2 show that in Examples 9 to 14 where preferred powder treating apparatus of the invention were utilized, the treating efficiency was further improved. The results of Table 3 show that more uniform and efficient treatment was achieved in

14

Examples 15 to 17 using the precessing rotating screw as compared with Comparative examples 1 and 2 which represent the conventional powder treating method.

By a powder treating method of the invention which comprises conducting low temperature plasma treatment of powder while stirring by vibration, uniform efficient treatment can be achieved. In another treating method of the invention, the low temperature plasma treatment of powder is performed while stirring by the precessional movement of a helical screw which is being rotated, whereby uniform and efficient treatment is possible. The use of an apparatus having a treating chamber including insulated parts which provide the electrodes for plasma atmosphere production (e.g. as described with reference to Figs.7 and 8) can improve treatment efficiency further.

## Claims

1. A method of treating powder which comprises subjecting the powder to active species from low temperature plasma while agitating it by vibration and/or by means of precessional movement of a rotating helical screw.

2. A method according to claim 1 wherein the powder is vibrated at a frequency of 10 Hz or more.

3. A method according to claim 1 or 2 wherein the powder is fluidized by vibration.

4. A method according to any of claims 1 to 3 wherein the powder is exposed to a low temperature plasma atmosphere produced by RF discharge or by microwave discharge.

5. A method according to any of claims 1 to 4 wherein the powder is dried beforehand and/or is classified beforehand to below a predetermined particle diameter.

6. An apparatus for performing the method according to claim 1 comprising a container for the powder, means for generating low temperature plasma and exposing powder in the container to active species therefrom, and means for agitating powder in the container by vibration (e.g. hydraulic vibratory motor means) and/or by a precessing rotating helical screw.

7. Apparatus according to claim 6 which has a treating chamber formed by two opposed portions with complementary openings joined via means electically insulating these portions so that they may be utilized as mutually facing exciting electrode and grounding electrode, preferably with a lower portion being the exciting electrode and an upper portion a grounding electrode and/or with an electromagnetic shield being provided for the exciting electrode.

8. Apparatus according to claim 7 wherein the ratio of diameter to height of the treating chamber is from 9:1 to 1:3.

9. Apparatus according to claim 7 or 8 wherein at least one gas supply pipe e.g. of insulating material or of metal coated with insulating material is provided on the grounding electrode portion of the chamber.

10. Apparatus according to claim 7, 8 or 9 wherein the outlet of the or each gas supply pipe is 60 cm or less below the surface of the powder in the treating chamber.

## Revendications

1. Procédé de traitement de poudre, selon lequel on soumet la poudre à des espèces actives provenant d'un plasma à basse température, tout en l'agitant au moyen de vibrations et/ou au moyen d'un mouvement de précession d'une vis hélicoïdale rotative.

2. Procédé suivant la revendication 1, caractérisé en ce qu'on fait vibrer la poudre à une fréquence de 10Hz, ou plus.

3. Procédé suivant la revendication 1 ou 2, caractérisé en ce qu'on fluidise la poudre en la faisant vibrer.

4. Procédé suivant l'une quelconque des revendications 1 à 3, caractérisé en ce qu'on expose la poudre à une atmosphère de plasma à basse température produite par décharge à fréquence radio ou par décharge à micro-ondes.

5. Procédé suivant l'une quelconque des revendications 1 à 4, caractérisé en ce qu'on fait préalablement sécher la poudre et/ou on la traite au préalable pour ne garder que les particules au dessous d'un diamètre prédéterminé.

6. Appareil pour la mise en oeuvre du procédé suivant la revendication 1, comprenant un conteneur pour la poudre, des moyens pour engendrer un plasma à basse température et exposer la poudre se trouvant dans le conteneur à des espèces actives provenant dudit plasma, et des moyens pour agiter la poudre dans le conteneur au moyen de vibrations (par exemple un dispositif vibratoire à moteur hydraulique) et/ou au moyen d'une vis hélicoïdale rotative à mouvement de précession.

7. Appareil suivant la revendication 6, comprenant une chambre de traitement formée de deux parties opposées ayant des ouvertures complémentaires, réunies par l'intermédiaire de moyens qui isolent électriquement ces deux parties de manière qu'elles puissent être utilisées comme des électrodes d'exitation et de masse se faisant face mutuellement, de préférence avec une partie inférieure constituant l'électrode d'excitation et une partie supérieure constituant l'électrode de masse et/ou avec un bouclier électromagnétique prévu pour l'électrode d'excitation.

8. Appareil suivant la revendication 7, caractérisé en ce que le rapport diamètre/hauteur de la chambre de traitement est de 9/1 à 1/3.

9. Appareil suivant la revendication 7 ou 8, caractérisé en ce qu'il est prévu au moins un conduit d'alimentation en gaz, par exemple en un matériau isolant ou un métal revêtu d'un matériau isolant, sur la partie de la chambre constituant l'électrode de masse.

10. Appareil suivant la revendication 7, 8 ou 9, caractérisé en ce que l'orifice de sortie du conduit, ou de chaque conduit, d'alimentation en gaz est situé à 60 cm, ou moins, au dessous de la surface de la poudre dans la chambre de traitement.

**Patentansprüche**

1. Verfahren zur Behandlung von Pulver, dadurch gekennzeichnet, daß man das Pulver dem Einfluß von aktiven Species von Niedertemperaturplasma aussetzt, während man es durch Vibration und/oder durch vorrückende Bewegung mittels einer rotierenden schraubenförmigen Schnecke bewegt.

2. Verfahren nach Anspruch 1, dadurch gekennzeichnet, daß man das Pulver einer Vibration bei einer Frequenz von 10 Hz oder mehr aussetzt.

3. Verfahren nach Anspruch 1 oder 2, dadurch gekennzeichnet, daß das Pulver durch Vibration fließfähig ist.

4. Verfahren nach irgendeinem der Ansprüche 1 bis 3, dadurch gekennzeichnet, daß man das Pulver einer durch RF-Entladung oder durch Mikrowellen erzeugten Niedertemperaturplasma-Atmosphäre aussetzt.

5. Verfahren nach irgendeinem der vorstehenden Ansprüche 1 bis 4, dadurch gekennzeichnet, daß man das Pulver vorher trocknet und/oder vorher unterhalb eines vorbestimmten Teilchendurchmessers klassifiziert.

6. Vorrichtung zur Durchführung des Verfahrens gemäß Anspruch 1, gekennzeichnet durch einen Behälter für das Pulver, Einrichtungen zur Erzeugung von Niedertemperaturplasma und zum Aussetzen des Pulvers in dem Behälter dem Einfluß der aktiven Species davon, und Einrichtungen zum Bewegen des Pulvers in dem Behälter durch Vibration (z. B. durch hydraulische Vibrationsbewegungseinrichtungen) und/oder durch eine vorrückend rotierende schraubenförmige Schnecke.

7. Vorrichtung nach Anspruch 6, gekennzeichnet durch eine Behandlungskammer, die durch zwei gegenüberliegende Teile mit komplementären Öffnungen gebildet ist und die über elektrisch isolierenden Einrichtungen verbunden sind, so daß sie wechselseitig als gegenüberliegende Zündelektrode und Erdungselektrode verwandt werden können, wobei vorzugsweise der untere Teil die Zündelektrode und der obere Teil die Erdungselektrode bildet, und/oder eine elektromagnetische Abschirmung für die Zündelektrode.

8. Vorrichtung nach Anspruch 7, dadurch gekennzeichnet, daß das Verhältnis von Durchmesser zur Höhe der Behandlungskammer 9:1 bis 1:3 beträgt.

9. Vorrichtung nach Anspruch 7 oder 8, dadurch gekennzeichnet, daß mindestens eine Gasversorgungsleitung, z. B. aus Isolationsmaterial oder einem mit Isolationsmaterial überzogenen Metall an dem als Erdungselektrode dienenden Teil der Kammer vorgesehen ist.

10. Vorrichtung nach Anspruch 7, 8 oder 9, dadurch gekennzeichnet, daß der Auslaß von der oder den Gasversorgungsleitungen 60 cm oder weniger unterhalb der Oberfläche des in der Behandlungskammer befindlichen Pulvers angeordnet ist.

FIG. 1

FIG. 2

FIG. 3

# FIG. 4

# FIG. 5

## FIG. 6

# FIG. 7

# FIG. 8

FIG. 9

# FIG. 10

# FIG. 11